# EUROPEAN PATENT APPLICATION

(11) **EP 4 614 771 A1**
(43) Date of publication of application: **10.09.2025**
(21) Application number: 24161608.5
(22) Date of filing: 05.03.2024
(51) Int. Cl.: H02K 1/32, H02K 3/24, H02K 3/52, H02K 3/30

(54) **AN ELECTRIC ROTATING MACHINE WITH IMPROVED HEAT TRANSFER CAPACITY**

(71) Applicant: TOYOTA JIDOSHA KABUSHIKI KAISHA, Toyota-shi, Aichi-ken, 471-8571 (JP)
(72) Inventor: SCHUERMANS, Raf, 1140 Brussels (BE); NOLF, Sam, 1140 Brussels (BE)
(74) Representative: Cabinet Beau de Loménie

(57) **Abstract**

A rotor (30) of an electric rotating machine (10), comprising:
- a rotor shaft (32) having a longitudinal axis (X);
- a rotor core (34) surrounding the rotor shaft (32) and having a plurality of pole members (36) arranged circumferentially about the rotor shaft and spaced apart from each other by a circumferential space (38), each pole member (36) extending radially relative to the rotor shaft (32) and away therefrom, each pole member (36) being provided with rotor windings (40) that are wound around the pole member, a pole separator (42) being arranged in each circumferential space (38) so as to keep the rotor windings in place, one or more pole separators (42) including a coolant,
characterized in that at least one of the one or more pole separators (42) includes a structure having a thermally conductive porous material (44) including a coolant flow passage.

## Description

### BACKGROUND OF THE INVENTION

### 1. Field of the invention

The present disclosure relates to electric rotating machines, in particular rotors of electric rotating machines.

### 2. Description of Related Art

Rotors of electric rotating machines, in particular of Electrically Excited Synchronous Motors (EESMs) have a known configuration in which the rotor has a rotor shaft having a longitudinal axis and a rotor core that surrounds the rotor shaft. Further, the rotor core has a plurality of pole members arranged circumferentially about the rotor shaft and spaced apart from each other by a circumferential space. Each pole member extends radially relative to the rotor shaft and away therefrom and is provided with rotor windings that are wound around the pole member. A pole separator may be arranged in each circumferential space so as to keep the rotor windings in place, in particular at high rotation speeds of the rotor.

As the rotor windings heat up during operation of the rotor, cooling of these rotor windings turns out to be helpful in order to improve the power density of this type of motors. The document DE102021111321 A1 describes such a rotor configuration where a cooling fluid pipe extends axially along an axis that is parallel to the rotor shaft axis. This cooling fluid pipe is arranged in each pole separator between two circumferentially adjacent rotor windings, in a radial position that is located close to the upper part of the circumferential space. A longitudinal cover is placed above each cooling fluid pipe, in the upper part of the circumferential space between two adjacent pole members and fixed to the latter, so as to close this space. The cooling fluid pipe is fixed to the cover and thus is fixed relative to the pole members.

The above configuration suffers from a lack of heat transfer efficiency since the windings located in a radial position that is proximal to the rotor shaft are far from the cooling fluid pipe.

### SUMMARY

An object of the present invention is to at least substantially remedy the above-mentioned drawbacks and, in particular, improve the heat transfer efficiency of the above-described prior art configuration.

In this respect, the present disclosure relates to a rotor of an electric rotating machine, comprising:
- a rotor shaft having a longitudinal axis;
- a rotor core surrounding the rotor shaft and having a plurality of pole members arranged circumferentially about the rotor shaft and spaced apart from each other by a circumferential space, each pole member extending radially relative to the rotor shaft and away therefrom, each pole member being provided with rotor windings that are wound around the pole member, a pole separator being arranged in each circumferential space so as to keep the rotor windings in place, one or more pole separators including a coolant, characterized in that at least one of the one or more pole separators includes a structure having a thermally conductive porous material including a coolant flow passage.

The above structure enables efficient heat transfer in the pole separator(s) from the coolant flow passage to the rotor windings located on either part of the pole separator(s) thanks to the thermally conductive porous material. The rotor windings are thus more efficiently cooled and heat transfer efficiency is therefore improved.

According to an embodiment, the structure of the at least one pole separator further includes a thermally conductive resin.

According to an embodiment, the thermally conductive porous material is a thermally conductive foam or sponge.

According to an embodiment, the structure of the at least one pole separator further includes a thermally conductive sheath enclosing the thermally conductive porous material.

According to an embodiment, the thermally conductive sheath includes two longitudinal and radially-extending walls between which the radial coolant flow passage extends.

According to an embodiment, the thermally conductive sheath is a thermally conductive resin.

According to an embodiment, the coolant flow passage extends radially away from the rotor shaft. Such a configuration enables radial distribution of the cooling effect over the radial extension of the rotor windings, thus further improving the heat transfer efficiency with respect to the prior art arrangement.

According to an embodiment, the rotor includes a coolant flow inlet and a coolant flow outlet that is located radially farther from the rotor shaft than the coolant flow inlet.

According to an embodiment, the coolant flow inlet is configured to allow coolant to enter into the thermally conductive porous material along a radial direction away from the rotor shaft.

According to an embodiment, the coolant flow inlet is further configured to provide an axial coolant flow before allowing coolant to enter into the thermally conductive porous material along a radial direction.

According to an embodiment, the coolant flow inlet is a bottom closure member configured internally to guide axially the coolant flow and having through orifices for allowing the guided coolant flow to enter into the thermally conductive porous material along a radial direction.

According to an embodiment, the coolant flow outlet is configured to allow heated coolant to escape from the thermally conductive porous material along a radial direction away from the thermally conductive porous material.

According to an embodiment, the coolant flow outlet is further configured to provide an axial coolant flow after allowing heated coolant to escape from the thermally conductive porous material along a radial direction.

According to an embodiment, the rotor includes a cap closure member having through orifices for collecting the radial heated coolant flow and configured internally to guide axially the collected heated coolant flow.

The present disclosure also relates to electric rotating machine comprising a rotor as briefly described above. The features and advantages mentioned above in relation with the rotor also apply here to the electric rotating machine and will not be repeated.

A third purpose of the present disclosure is to propose a vehicle comprising an electric rotating machine as briefly defined above.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
Figure 1 is a schematic representation in a transverse cross section of an electric rotating machine according to an embodiment of the present disclosure ;
Figure 2 is a partial and enlarged view of a rotor pole arrangement of the rotor of Figure 1 according to a first embodiment;
Figure 3 is a partial and enlarged view of the rotor pole arrangement of figure 2;
Figures 4A and 4B are schematic views illustrating the flow of coolant respectively in the transverse plane of figure 2 and in a longitudinal plane according to the first embodiment;
Figures 5A and 5B are schematic views illustrating the flow of coolant respectively in the transverse plane of figure 2 and in a longitudinal plane according to a second embodiment;
Figure 5C is a partial and enlarged view of the bottom closure member of figures 5A and 5B;
Figures 6A and 6B are schematic views illustrating the flow of coolant respectively in the transverse plane of figure 2 and in a longitudinal plane according to a third embodiment;
Figure 6C is a partial and enlarged view of the cap closure member of figures 6A and 6B;
Figures 7A and 7B are schematic views illustrating the flow of coolant respectively in the transverse plane of figure 2 and in a longitudinal plane according to a fourth embodiment.

### DETAILED DESCRIPTION OF EMBODIMENTS

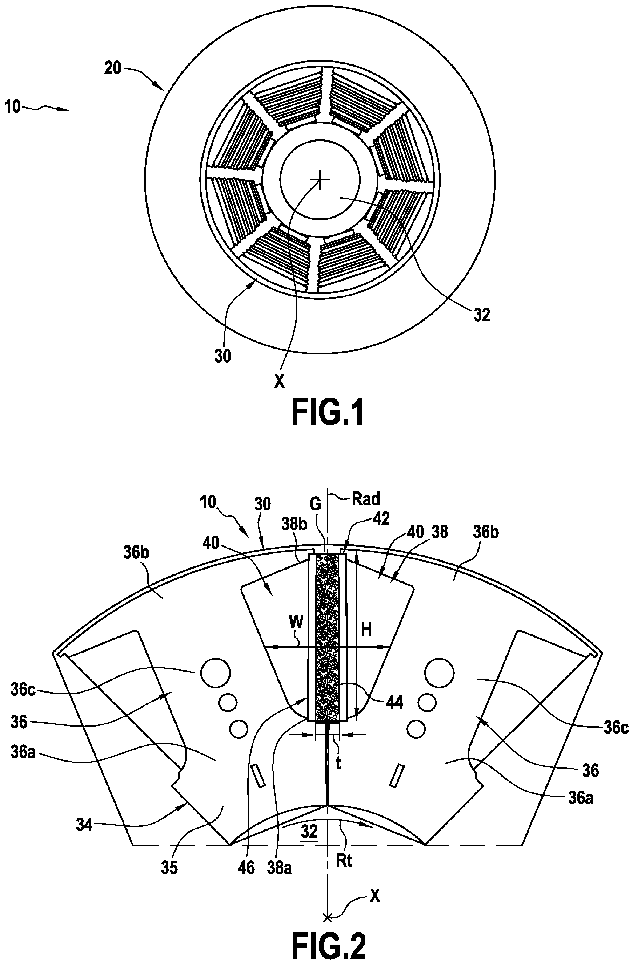

An electric rotating machine 10 in accordance with an embodiment of the present disclosure is suitable for driving a vehicle, more specifically a battery electric vehicle (BEV) or any other vehicle powertrain architecture where the vehicle is propelled by the mechanical torque produced by the rotation of the rotor based on the electric energy provided from a battery. The electric rotating machine 10 comprises a stator 20 of a conventional type and a rotor 30 as schematically illustrated in Figure 1.

The electric rotating machine 10 may be an Electrically Excited Synchronous Motor or EESM.

The stator 20 and the rotor 30 functionally cooperate together in a conventional manner either to produce a mechanical torque when supplied with electrical energy or produce electric energy when supplied with mechanical energy in the so-called recuperation mode of driving the vehicle under negative acceleration such as when the vehicle is slowing down.

As illustrated in figure 1 and also in figure 2 which highlights an elementary part of the rotor 20, the rotor 30 comprises a rotor shaft 32 that has a longitudinal axis X about which the rotor shaft is able to rotate along the rotation direction indicated by the arrow Rt in figure 2. The rotor shaft 32 may be made hollow. To be noted that the rotor 30 comprises several elementary parts as that of figure 2 and that are distributed circumferentially relative to the longitudinal axis X in order to obtain the figure 1 arrangement.

The rotor 30 also comprises a rotor core 34 that may be made by stacking or piling up several layers or laminations (the laminations have their entire cross section from a metal punching production process) on top of each other along an axial direction that is parallel to the rotor shaft 32, in a known manner, to form the rotor core cylindrical shape. The rotor core 34 is rotatably coupled to the rotor shaft 32.

More particularly, rotor core 34 comprises a plurality of pole members or teeth 36 arranged circumferentially about the rotor shaft 32 and spaced apart from each other by a circumferential space 38. Each pole member 36 extends radially (along the overall radial direction Rad) away from a common part of the rotor core that forms a hub 35 arranged around the rotor shaft 32 and that is rotatably coupled thereto so that a rotation of one of these parts causes the other part to rotate. Each pole member 36 extends or protrudes radially from a root or base 36a that is located on an outer surface of the hub 35 to a tip or head 36b. Each pole member 36 may take the shape of a mushroom or a nail with a curved head such as an upholstery nail. To be noted that the respective tips or heads 36b of the two adjacent pole members 36 of figure 2 are circumferentially spaced from each other so as to leave a circumferential gap G therebetween.

As represented in figure 2, two adjacent pole members 36 are circumferentially separated by a space 38 which extends both transversally or circumferentially and radially from a bottom end 38a to a top end 38b. The bottom end 38a is located between the two roots or bases 36a of the two adjacent pole members 36 and in a radially inner position that is the same as that of the roots or bases 36a. The top end 38b is located between the two tips or heads 36b of the two adjacent pole members 36 and in a radially outer position that is substantially the same as that of the tips or heads 36b.

The pole members 36 and the associated spaces 38 therebetween also extend axially in a longitudinal direction that is parallel to longitudinal axis X and perpendicular to the figure 2 plane.

Each radially extending pole member 36 is provided with rotor windings 40 that are wound around the pole member in a known manner. The rotor windings are more particularly wound around the body 36c of the pole member, the body 36c being located between the root 36a and the tip 36b.

As represented in figure 2, the circumferential space 38 is provided with a a pole separator 42 that is arranged between the rotor windings 40 of the two adjacent pole members 36 and extends substantially along the whole radial extension H of the circumferential space 38, i.e. from its bottom end 38a to its top end 38b. The pole separator 42 also extends transversally or circumferentially so as to occupy a portion of the width W of the circumferential space 38 (the width W varies along the radial extension H) which makes it possible to mechanically keep both rotor windings 40 in place against their respective pole member bodies 36c and the underside of the pole member tips 38b.

In the embodiment illustrated in figure 2, the pole separator 42 occupies substantially the width of the portion of the circumferential space 38 that is radially aligned with the gap G provided between the pole member tips 36b. This makes it possible to insert the pole separator from the top of the circumferential space 38 through the gap G.

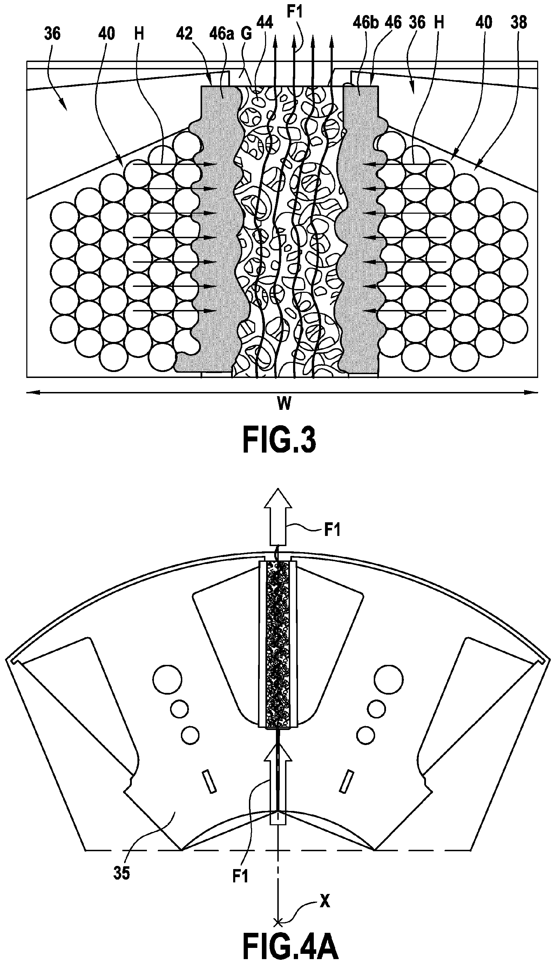

Figure 3 is an enlarged and partial view of the pole separator 42 of figure 2 and its adjacent rotor windings 40 in the upper part of the circumferential space 38.

As shown in a more detailed view in figure 3, the pole separator 42 includes a structure having a thermally conductive porous material 44 that is enclosed by a thermally conductive sheath 46. More particularly, the sheath 46 comprises two spaced apart walls 46a, 46b between which the thermally conductive porous material 44 is located and trapped. The walls 46a, 46b extend both longitudinally in a direction parallel to longitudinal axis X (perpendicular to the figure 3 plane) and radially from the bottom end 38a of the circumferential space 38 to the top end 38b of the latter. The two walls 46a, 46b define together the width of the pole separator 42 and form a mechanical and robust structure that enables position keeping of the rotor windings.

By way of example, the thermally conductive sheath 46 is a thermally conductive resin such as a new generation polyimide (PI), potentially filled with aluminium oxide, or any other resin with a high thermal conductivity..

The thermally conductive porous material 44 may be a thermally conductive foam or sponge. Such a porous material makes it possible to be flowed through by a coolant (liquid) and thus includes a coolant flow passage that is composed of the different paths followed by the coolant through the pores of the material from a zone of the porous material where the coolant enters the material. Such a zone may be generally the zone which is in contact with the root 38a of the circumferential space 38. Depending on the porosity of the material 44, the coolant (cooling medium) can flow through the latter faster (high porosity) or slower (low porosity).

By way of example, the thermally conductive foam or sponge 44 may be pre-formed and inserted into space 38 in a slightly compressed state whereafter it expands flexibly inside the space. Alternatively, the thermally conductive foam 44 may be formed in place by injecting the base material into space 38 whereafter the material expands and forms a porous sponge-like structure that entirely fills up the space.

In the structure represented on the figures, the resin is solidified after curing and bonds in the porous material as well as in the windings 40, which makes a continuous structure. Thus the rotor will be more structurally rigid and will have less degrees of freedom to vibrate. The rotor will then be less prone to propagate vibrations and less noisy.

Given the above structure, the amount of resin that is used for making the structure of the pole separator 42 is limited, which makes it a more sustainable solution compared to filling up the entire space 38 with resin. Since the resin is unlikely to be recycled at the end of life of the product, it is advantageous if the product contains only a small amount of such resin.

As shown in figure 3, the coolant flows radially along the F1 direction from the bottom end of the circumferential space 38 to the top thereof where the coolant can escape (flow outlet) since the gap G is free of any obstacle.

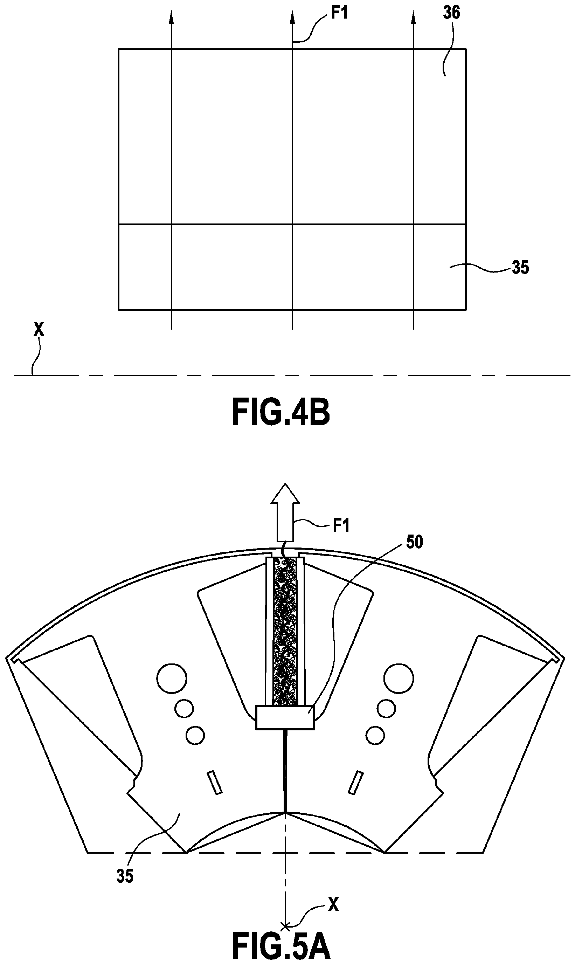

This embodiment is schematically illustrated in figures 4A and 4B where the radial coolant flow along the direction Flis supplied by an inlet flow Fi originating from an axial cavity accommodated in the hollow shaft 32 (not represented here). The coolant inlet flow Fi extends radially through the rotor hub 35, for example through inner channels, before flowing through radial orifices provided in the bottom end 38a and which open out into the thermally conductive porous material 44. As shown in figure 4B, the radial orifices, as well as the inner channels of the hub 35, are distributed along the axial extension of the arrangement. To be noted that the coolant may be supplied at an axial end of the rotor shaft axial cavity and flow axially therein so as to reach one or more radial flow passages that extend through the rotor shaft outer wall and the rotor hub 35 to the bottom end 38a radial orifices.

When the electric rotating machine 10 is operated and electric current circulates through the rotor windings 40, heat is generated. As illustrated in figure 3, the generated heat is denoted by arrows H and flows transversally (in the width direction of the space 38) through the thermally conductive structure of the pole separator 42 from each rotor winding 40 and outwards thereof. As the walls 46a, 46b are thermally conductive and the coolant flows radially throughout the whole thermally conductive porous material 44 (arrows F1) from bottom to top, this makes it possible to progressively evacuate the heat H that is transferred from both rotor windings 40 (left and right on figure 3) through the walls 46a, 46b along the whole height (radial extension) of the walls, as the coolant flows upwardly along the walls as a curtain of coolant fluid.

Heat generated in the rotor windings 40 is thus efficiently dissipated through the outwardly-oriented radial flow of coolant inside the whole thermally conductive structure of the pole separator 42 which expels the calories outside the circumferential space 38 and the gap G. Efficiency of the heat transfer can be explained by the fact that the whole structure of the pole separator 42 is thermally conductive and the coolant flows through the whole height and width of the porous material 44 (high power of heat transfer due to a large contact surface) and not only in some local areas as would be the case with separate coolant pipes. As a consequence, the power density of the electric rotating machine is improved because the electric current can be increased without hitting the thermal limits of its materials.

By way of example, the surface area of a foam material 44 which is capable of producing a cooling effect can be calculated based on the following formula Sev.V, where V is the volume occupied by the material, that is V= (width t of the material).(height H of the material).(length L of the material). Sev is a value expressed in cm2/cm3 which is specific to a sample of foam material and can, for example, take values lying from 165.747 to 591.03. For example, if we consider a volume of porous material V (t.H.L) = 4.6mm. 27.73mm.125.7mm, then the resulting foam surface area may range from 265759 mm2 to 947660 mm2 depending on the foam material sample.

By comparison, the surface area of the prior art arrangement of DE10202111321 A1 with an axial fluid pipe may be calculated based on the formula d (diameter of the pipe).π.L (length of the pipe). In a comparative example with a pipe diameter d of 4mm and a length L of 125.7, the resulting surface area that is capable of producing a cooling effect may be of 1580mm2, which is therefore much less than the above calculated surface areas of a foam material 44 according to the present disclosure. Based on this example, the cooling capability of the thermally conductive structure of the pole separator 42 turns out to be greatly increased since the foam surface area of the latter is several hundreds of times greater than the above prior art pipe surface area.

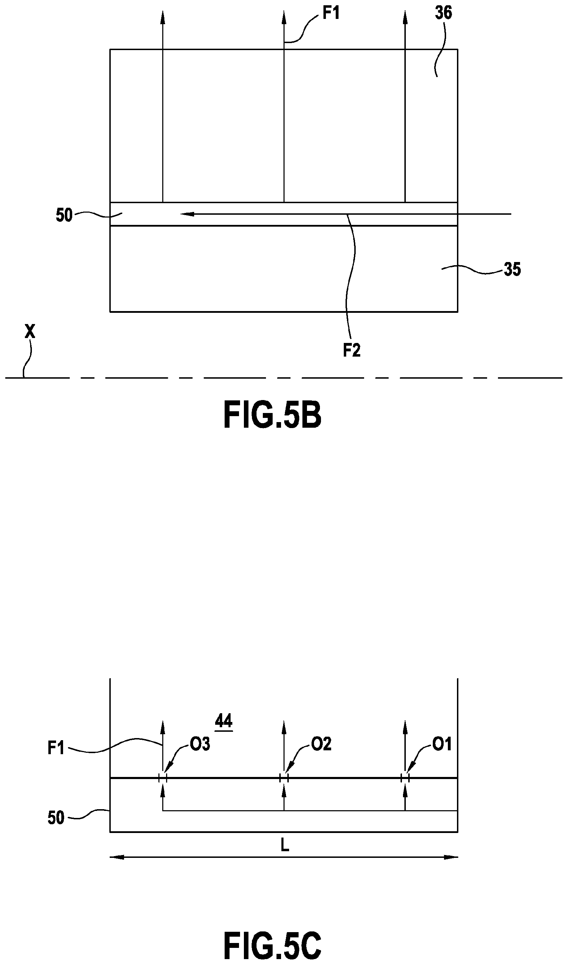

Figures 5A-C illustrate another embodiment wherein the flow of coolant is still radial and oriented outwardly (direction F1) as in the figures 4A-B embodiment so that the coolant flow outlet is located radially farther from the rotor shaft than the coolant flow inlet. However, in the figures 5A-C embodiment a hollow bottom closure member 50 is located in the bottom zone of the space 38 (bottom end 38a) between the hub 35 and the space 38 and extends axially along an axis parallel to longitudinal axis X (figure 5B). The hollow bottom closure member 50 may be integrated into the rotor hub 35.. The coolant flows axially inside the hollow bottom closure member 50 which is configured internally to guide the coolant, as shown in the figures 5B and 5C, and then enters the above porous material 44 via through orifices 01-03 provided in the upper wall of the bottom closure member 50 that is in contact with the porous material 44. The flow of coolant is then introduced into the porous material 44 along a radial direction F1 as in the figures 4A-B embodiment. As in the previous embodiment, the number of through orifices, e.g. three, can take any values, depending on the length L. Overall, the number of orifices is to be as high as possible so as to distribute the coolant flow over the greater possible area. In the figures 5A-C embodiment a supply of coolant fluid may be provided at an axial end of the bottom closure member 50.

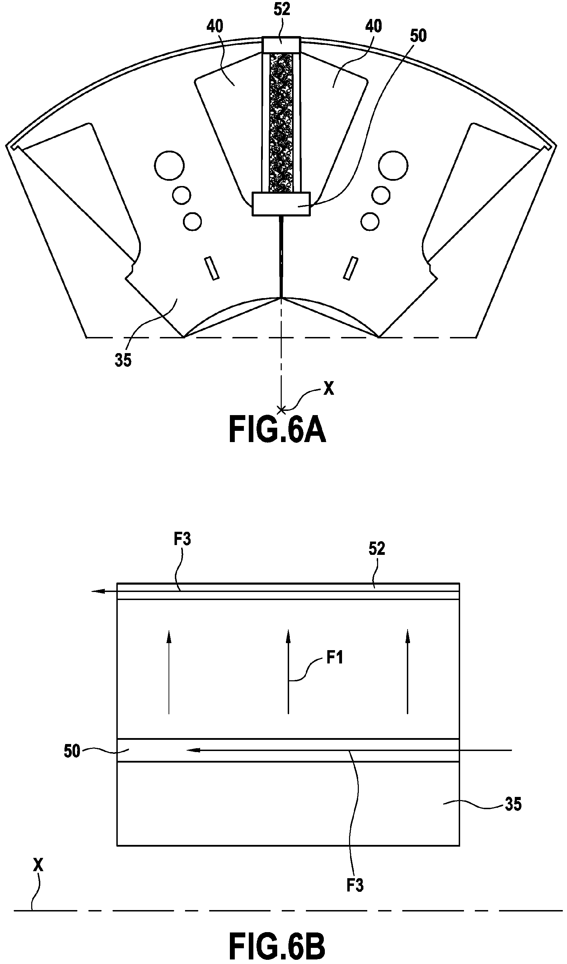

Figures 6A-C illustrate another embodiment wherein the flow of coolant is still radial and oriented outwardly (direction F1) as in the figures 5A-C embodiment so that the coolant flow outlet is located radially farther from the rotor shaft than the coolant flow inlet. As in the figures 5A-C embodiment, a hollow bottom closure member 50 is present in the arrangement as a coolant flow inlet to provide both an axial coolant flow and a radial coolant flow inlet to the porous material.

In contrast with the figures 5A-C embodiment, the coolant flow outlet is not provided through the circumferential gap G between the pole member tips 38b. Here, a hollow cap closure member 52 is located in the upper part of the circumferential space 38, in the gap G so as to radially collect the radial flow of coolant that has traveled through the porous material 44 and progressively extracted calories from the heat dissipation flux originating from the rotor windings 40. By way of example, a single large opening (ex: slot) on the whole length of the cap 52 allows to collect the flow of coolant.

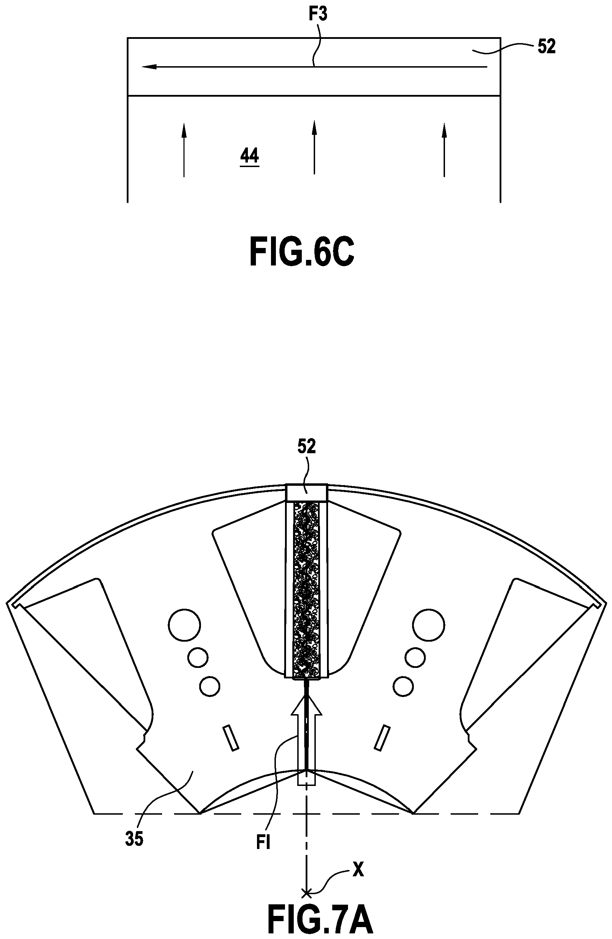

The heated coolant flow collected in the hollow cap closure member 52 is then axially directed/guided therein and heated coolant flows axially along the direction F3 as shown in figures 6B and 6C. The hollow cap closure member 52 as a coolant flow outlet thus provides both a radial coolant exit for the heated radial coolant flow and an axial coolant flow.

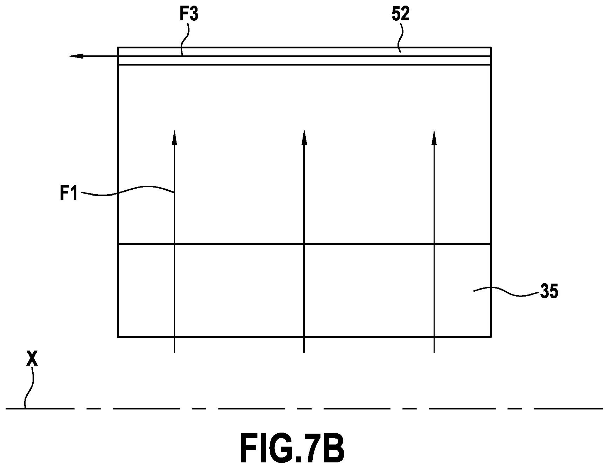

Figures 7A-B illustrate another embodiment wherein the flow of coolant is still radial and oriented outwardly (direction F1) as in the figures 6A-C embodiment so that the coolant flow outlet is located radially farther from the rotor shaft than the coolant flow inlet. As in the figures 4A-B embodiment, the coolant flow inlet Fi is arranged in the rotor hub 35 and is radially oriented from the rotor shaft and, for example, can take the shape of radial inner channels (not represented). In addition, in the present embodiment, the coolant flow outlet is configured as in the figures 6A-C embodiment, where the coolant flow outlet takes the form of a hollow cap closure member 52. The heated coolant flow is collected in the same manner and circulates axially within the member 52 before being evacuated from the latter.

As shown in all the figures 4A to 7B, the coolant flow enters into the thermally conductive porous material 44 along a radial direction at the bottom end of the circumferential space 38 and exits from the thermally conductive porous material 44 along the same radial direction at the upper end of the space 38. This radial coolant flow is distributed over the whole length of the porous material and, within the porous material, takes several routes through the different pores constituting the porous material so as to widely spread throughout the whole porous material and increase the surface contact area with the heat dissipating flux H as much as possible. This explains the great heat transfer capacity of the present disclosure.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A rotor (30) of an electric rotating machine (10), comprising:
- a rotor shaft (32) having a longitudinal axis (X);
- a rotor core (34) surrounding the rotor shaft (32) and having a plurality of pole members (36) arranged circumferentially about the rotor shaft and spaced apart from each other by a circumferential space (38), each pole member (36) extending radially relative to the rotor shaft (32) and away therefrom, each pole member (36) being provided with rotor windings (40) that are wound around the pole member, a pole separator (42) being arranged in each circumferential space (38) so as to keep the rotor windings in place, one or more pole separators (42) including a coolant,
**characterized in that** at least one of the one or more pole separators (42) includes a structure having a thermally conductive porous material (44) including a coolant flow passage.

2. The rotor (30) of claim 1, wherein the structure of the at least one pole separator (32) further includes a thermally conductive resin (46).

3. The rotor (30) of claim 1 or 2, wherein the thermally conductive porous material (44) is a thermally conductive foam or sponge.

4. The rotor (30) of any one of claims 1 to 3, wherein the structure of the at least one pole separator (42) further includes a thermally conductive sheath (46) enclosing the thermally conductive porous material (44).

5. The rotor (30) of claim 4, wherein the thermally conductive sheath (46) includes two longitudinal and radially-extending walls (46a, 46b) between which the radial coolant flow passage extends.

6. The rotor (30) of claim 4 or 5, wherein the thermally conductive sheath (46) is a thermally conductive resin.

7. The rotor (30) of any one of claims 1 to 6, wherein the coolant flow passage extends radially (F1) away from the rotor shaft (32).

8. The rotor (30) of any one of claims 1 to 7, wherein it includes a coolant flow inlet and a coolant flow outlet that is located radially farther from the rotor shaft (32) than the coolant flow inlet.

9. The rotor (30) of claim 8, wherein the coolant flow inlet is configured to allow coolant to enter into the thermally conductive porous material (44) along a radial direction (F1) away from the rotor shaft.

10. The rotor (30) of claim 9, wherein the coolant flow inlet is further configured to provide an axial coolant flow (F2) before allowing coolant to enter into the thermally conductive porous material (44) along a radial direction (F1).

11. The rotor (30) of claim 10, wherein the coolant flow inlet is a bottom closure member (50) configured internally to guide axially the coolant flow and having through orifices (O1, O2, O3) for allowing the guided coolant flow to enter into the thermally conductive porous material (44) along a radial direction (F1).

12. The rotor (30) of any one of claims 8 to 11, wherein the coolant flow outlet is configured to allow heated coolant to escape from the thermally conductive porous material (44) along a radial direction (F1) away from the thermally conductive porous material.

13. The rotor (30) of claim 12, wherein the coolant flow outlet is further configured to provide an axial coolant flow (F3) after allowing heated coolant to escape from the thermally conductive porous material (44) along a radial direction.

14. The rotor (30) of claim 13, wherein it includes a cap closure member (52) having through orifices for collecting the radial heated coolant flow and configured internally to guide axially the collected heated coolant flow.

15. An electric rotating machine (10) comprising a rotor (30) according to any one of the preceding claims.
